# EUROPEAN PATENT APPLICATION

(11) **EP 4 632 923 A1**
(43) Date of publication of application: **15.10.2025**
(21) Application number: 24856715.8
(22) Date of filing: 08.08.2024
(51) Int. Cl.: H01M 50/383, H01M 10/658, H01M 50/367, H01M 50/249

(54) **BATTERY PACK AND VEHICLE INCLUDING SAME**

(30) Priority: 21.08.2023 KR 20230109366
(71) Applicant: LG Energy Solution, Ltd., Seoul 07335 (KR)
(72) Inventor: LEE, Jung-Hoon, Daejeon 34122 (KR); KIM, Kwang-Mo, Daejeon 34122 (KR)
(74) Representative: Plasseraud IP
(86) International application number: PCT/KR2024/011834
(87) International publication number: WO 2025/042103

(57) **Abstract**

Disclosed is a battery pack, which includes a plurality of battery modules; a pack tray having an open upper portion and an inner space capable of accommodating the plurality of battery modules, the pack tray including a beam frame arranged between the battery modules adjacent to each other and partitioning the inner space; a pack cover covering the upper portion of the pack tray; and a flame blocking unit connected to the beam frame and provided to cover the corresponding battery module at a lower portion of the pack cover to block a flame emitted from the battery module.

## Description

### TECHNICAL FIELD

The present disclosure relates to a battery pack, and more specifically, to a battery pack capable of suppressing heat transfer to adjacent battery modules and flame emission to the outside of the battery pack when a specific battery module is ignited, and a vehicle including the same.

The present application claims priority to Korean Patent Application No. 10-2023-0109366 filed on August 21, 2023 in the Republic of Korea, the disclosures of which are incorporated herein by reference.

### BACKGROUND ART

Recently, secondary batteries are applied to various devices. For example, secondary batteries are being widely used as energy sources for multi-functional small products such as wireless mobile devices or wearable devices, and are also being used in electric vehicles, hybrid electric vehicles, and the like, which are presented as alternatives to existing gasoline and diesel vehicles.

In general, the commercialized secondary battery has an operation voltage of approximately 2.5V to 4.5V. Therefore, for an electric vehicle or energy storage device that requires large capacity and high output, battery modules in which multiple secondary batteries are connected in series and/or parallel are connected in series and/or parallel to form a battery pack that is used as an energy source.

As described above, as secondary batteries are used as large-capacity and high-output energy sources, securing the safety of the battery module or the battery pack has become an important issue.

Since secondary batteries use an electrochemical reaction mechanism as their fundamental driving principle, there is a possibility that a chemical explosion may occur due to various causes, such as a strong impact from the outside, a short circuit between electrodes, or electrolyte leakage. For example, if an overcurrent flows through a secondary battery, the internal temperature of the secondary battery rapidly increases. The rapid increase in temperature may cause a decomposition reaction of the electrolyte, which may generate gas. In this case, a swelling phenomenon, which is a type of inflating phenomenon, may occur due to an increase in the pressure inside the battery case, and if this worsens, the secondary battery may catch fire or explode.

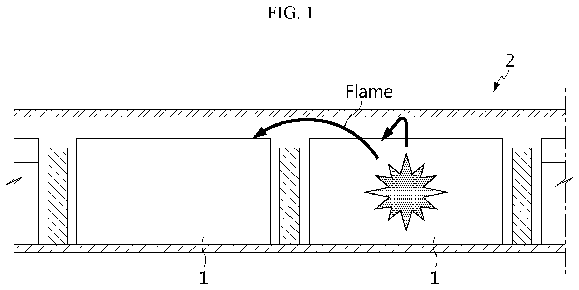

Meanwhile, a battery pack according to the prior art, as shown in FIG. 1, houses battery modules 1 inside a pack case 2, and has a gas discharge hole (not shown) in at least one sidewall of the pack case. If a specific battery module inside the battery pack ignites and gas is generated, the gas may be discharged to the outside through the gas discharge hole, so that the internal pressure of the battery pack does not rapidly increase.

However, in the conventional battery pack, when gas is discharged to the outside through the gas discharge hole, flames or high-temperature particles may also be discharged to the outside. In particular, if the flame leaks to the outside of the pack case, it may cause ignition of surrounding structures or objects adjacent to the battery pack. In addition, as shown in FIG. 1, when the flame moves toward the gas discharge hole, it may be transmitted to adjacent battery modules, and thus the battery modules may rapidly ignite in a chain reaction. As a result, heat and pressure inside the battery pack may rapidly increase, causing the pack case to collapse or melt, and the flame may spread more quickly to the outside of the battery pack.

Accordingly, a method to suppress heat transfer between battery modules and flame leakage to the outside of the battery pack when a thermal event occurs in a specific battery module is required.

### DISCLOSURE

### Technical Problem

The present disclosure is designed to solve the problems of the related art, and therefore the present disclosure is directed to providing a battery pack, which may delay a collapse rate of the battery pack by preventing heat transfer between battery modules as much as possible when a thermal event occurs in a specific battery module.

In addition, the present disclosure is directed to providing a battery pack, which may suppress flame leakage to the outside of the battery pack as much as possible when a thermal event occurs.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack comprising: a plurality of battery modules; a pack tray having an open upper portion and an inner space capable of accommodating the plurality of battery modules, the pack tray including a beam frame arranged between the battery modules adjacent to each other and partitioning the inner space; a pack cover covering the upper portion of the pack tray; and a flame blocking unit connected to the beam frame and provided to cover the corresponding battery module at a lower portion of the pack cover to block a flame emitted from the battery module.

The flame blocking unit may be coupled to the beam frame so as to be lifted by a gas emitted from the corresponding battery module.

The flame blocking unit may include a flame blocking cover covering one of the battery modules disposed between two beam frames; and at least one support member fixedly coupled to the beam frame and supporting the flame blocking cover to a predetermined height.

The support member may include a fixed bracket having a support plate fixedly coupled to an upper end of the beam frame and extending in a height direction, and a detachment prevention plate extending in a horizontal direction from an upper end of the support plate and having a through hole; a support rod extending downward from the flame blocking cover and passing through the through hole, the support rod having a head formed at a lower end thereof with a diameter larger than the through hole; and a compression spring fitted in the support rod between the head of the support rod and the detachment prevention plate.

The support plate may include a first support plate and a second support plate arranged to be spaced apart from each other and extending in the height direction in parallel, and the detachment prevention plate may have one end connected to the first support plate and the other end connected to the second support plate.

The flame blocking cover may have at least one gas venting hole.

The flame blocking cover may further include an insulating material attached to an upper surface of the flame blocking cover.

The flame blocking cover may have at least one gas venting hole, and the insulating material may include a cutting portion provided in an area corresponding to the gas venting hole and configured to be torn by a predetermined pressure.

The flame blocking cover may include an upper blocking plate covering an upper portion of the battery module; a first side blocking plate bent downward from one side edge of the upper blocking plate and extending to a position lower than an upper end of the beam frame located at a left side of the battery module; and a second side blocking plate bent downward from the other side edge of the upper blocking plate and extending to a position lower than an upper end of the beam frame located at a right side of the battery module.

The upper blocking plate may include a protruding portion that protrudes outwardly from one of two beam frames with respect to one of the battery modules, and a recessed portion that is recessed inwardly from the other beam frame, and the protruding portion of one of the flame blocking covers may be provided to be shape-fitted with the recessed portion of the other of the flame blocking covers, so that each of the battery modules is individually covered by each of the flame blocking covers.

The first side blocking plate may be bent downward from an edge of the protruding portion among one side edge of the upper blocking plate, and the second side blocking plate may be bent downward from an edge among the other side edge of the upper blocking plate except the recessed portion.

A gas flow passage may be provided between an upper portion of the flame blocking unit and a lower portion of the pack cover.

The flame blocking cover may be made of metal.

The insulating material may be made of mica or silicone.

In another aspect of the present disclosure, there is provided a vehicle including the battery pack described above.

### Advantageous Effects

According to the present disclosure, it is possible to provide a battery pack, which may delay a collapse rate of the battery pack by preventing heat transfer between battery modules as much as possible when a thermal event occurs in a specific battery module.

According to the present disclosure, it is possible to suppress or delay flame leakage to the outside of the battery pack as much as possible when a thermal event occurs.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a schematic cross-sectional view showing a battery pack according to the prior art.
FIG. 2 is a schematically perspective view showing main components of a battery pack according to an embodiment of the present disclosure.
FIG. 3 is a schematic exploded perspective view showing a flame blocking unit of FIG. 2.
FIG. 4 is a drawing showing a portion of the battery pack according to an embodiment of the present disclosure.
FIG. 5 is a drawing showing a flame blocking cover and a support member according to an embodiment of the present disclosure.
FIG. 6 is a drawing showing the support member of FIG. 5 from a different angle.
FIG. 7 is a cross-sectional view showing a portion of the battery pack according to an embodiment of the present disclosure.
FIG. 8 is a cross-sectional view showing a portion of the battery pack when the flame blocking unit according to an embodiment of the present disclosure is lifted.
FIG. 9 is a drawing showing a portion of a battery pack to which a flame blocking unit according to another embodiment of the present disclosure is applied.
FIG. 10 is a drawing showing an example in which the flame blocking unit is individually applied to all battery modules in FIG. 9.
FIG. 11 is a drawing showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, when explaining the present disclosure, if it is judged that a detailed description of the relevant notice structure or function may obscure the main point of the present disclosure, such detailed description will be omitted.

Since the embodiments of the present disclosure are provided to more completely explain the present disclosure to those skilled in the art, the shapes and sizes of components in the drawings may be exaggerated, omitted, or schematically illustrated for clearer explanation. Accordingly, the size or ratio of each component does not entirely reflect the actual size or ratio.

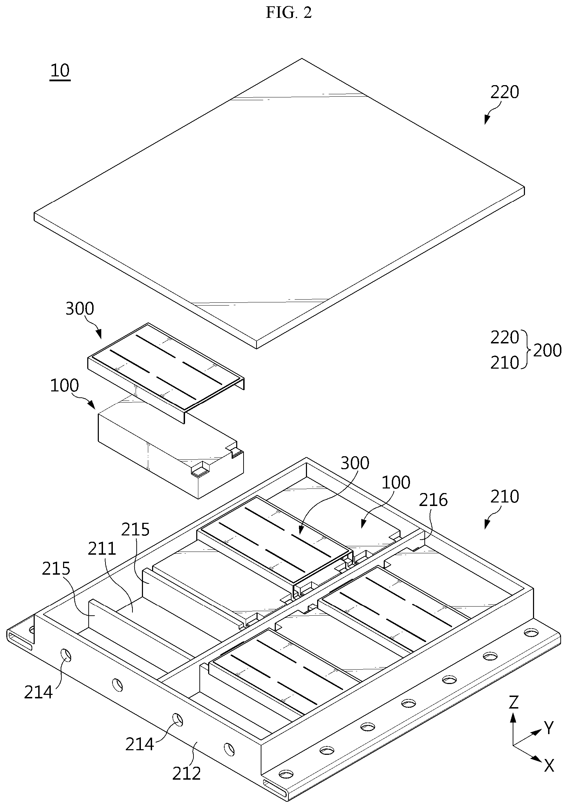

Referring to FIGS. 2 to 4, a battery pack 10 according to an embodiment of the present disclosure includes a plurality of battery modules 100, a pack case 200, and a flame blocking unit 300.

The battery module 100 may include a plurality of battery cells and a module case accommodating the battery cells, although not illustrated for convenience of illustration. The battery cell refers to a secondary battery including an electrode assembly, an electrolyte, and a battery case. The battery cell may be any shape of a secondary battery, such as a pouch-shaped, cylindrical, or rectangular secondary battery. In addition, the module case may be made of a metal material, such as steel, or a non-metallic material with high rigidity, so as to protect the battery cells from external impact, etc. In addition, the module case may accommodate the battery cells and have a module venting hole in at least one side. In the case of the battery module 100, when an internal fire occurs, gas, etc. may be discharged out of the module case through the module venting hole.

The battery modules 100 are mounted in the pack case 200 and may be electrically connected to each other using an interconnect bus bar (not shown) or cable.

The pack case 200 may be configured to have an inner space capable of accommodating the plurality of battery modules 100 and protect the battery modules 100 from external impact, etc.

In this embodiment, the pack case 200 may include a pack tray 210 and a pack cover 220, as illustrated in FIG. 2. The pack tray 210 may be provided in a box shape with an open upper portion and having an inner space capable of accommodating a plurality of battery modules 100. The pack cover 220 may be provided in an approximately plate shape with an area capable of covering at least the upper portion of the pack tray 210.

Specifically, the pack tray 210 includes a base plate 211 that supports the battery modules 100 at the lower portion of the battery modules 100, and a wall 212 that forms a wall body along an outer perimeter of the base plate 211. The inner space of the pack tray 210 is formed by the base plate 211 and the wall 212. In addition, the pack tray 210 includes a plurality of beam frames 215 that partition the inner space.

The pack tray 210 may be configured such that when the battery modules 100 are mounted on the base plate 211 of the pack tray 210, the beam frame 215 is positioned between two battery modules 100 adjacent to each other. In other words, one battery module 100 may be positioned in the space between two beam frames 215.

In addition, the pack tray 210 according to this embodiment may include a center beam 216 extending in a horizontal direction (Y direction) inside the pack tray 210 and dividing the inner space of the pack tray 210 into two parts, as illustrated in FIG. 2. In addition, the beam frame 215 may extend in a vertical direction (X direction) inside the pack tray 210, and may have one end connected to the center beam 216 and the other end connected to the wall 212. The beam frames 215 may be provided at predetermined intervals along the horizontal direction (Y direction) inside the pack tray 210. The pack tray 210 has partitioned spaces formed by being surrounded by the wall 212, the center beam 216, and the beam frames 215. The battery modules 100 may be accommodated one by one in each of the partitioned spaces.

In addition, the pack tray 210 may have at least one gas discharge hole 214 in the wall 212. In this embodiment, the pack tray 210 has the gas discharge hole 214 in the wall 212 extending in the vertical direction (X direction). For example, the gas discharge hole 214 may be provided in at least one among the wall 212 located in the +Y direction and the wall 212 located in the -Y direction in FIG. 2. In this case, when a venting gas is generated in the battery module 100, the venting gas may move in the vertical direction (Y direction) along the gas flow passage VS inside the pack case 200 and be discharged to the outside of the pack case 200 through the gas discharge hole 214. Here, the gas flow passage VS means an empty space formed between the upper portion of the battery module 100 and the lower portion of the pack cover 220 among the inner space of the pack case 200. When the pack tray 210 and the pack cover 220 are coupled, the left and right spaces based on the center beam 216 may be configured to be blocked. In this case, for example, venting gas generated from a battery module 100 accommodated in the left space of the center beam 216 may move in the vertical direction (Y direction), but movement in the horizontal direction (X direction) may be restricted by being blocked by the center beam 216.

The pack cover 220 may be provided in the form of a cover capable of covering the upper portions of all battery modules 100. The pack cover 220 may be connected to the pack tray 210, for example, by bolt fastening. The border of the pack cover 220 may be secured to the border of the upper end of the wall 212 of the pack tray 210 and bolt-fastened. Although not shown, a sealing gasket may be arranged on the upper end of the wall 212 of the pack tray 210, and the border of the pack cover 220 may be placed thereon to enhance sealing properties.

The pack cover 220 may be configured to be bolt-fastened to the center beam 216 of the pack tray 210. The bolt fastening between the pack cover 220 and the center beam 216 may be omitted in some cases.

In addition, the pack cover 220 may be configured not to contact the upper end of the beam frame 215 or the upper surface of the battery module 100 in order to secure the aforementioned gas flow passage VS inside the pack case 200. For example, the upper end of the wall 212 may be higher than the upper end of the beam frame 215 or the upper surface of the battery module 100, and the border of the pack cover 220 may be placed on the upper end of the wall 212 so that the pack cover 220 does not contact the upper end of the beam frame 215 or the upper surface of the battery module 100.

In this embodiment, the pack cover 220 has a plate-like shape, but the pack cover 220 may also be configured as a hexahedral shape with an open lower surface. In this case, the pack cover 220 may be configured to more reliably not contact the upper end of the beam frame 215 or the upper surface of the battery module 100.

When, for example, ignition occurs in a specific battery module 100 inside the pack case 200, the flame blocking unit 300 serves to block the flame from spreading to battery modules 100 adjacent to the specific battery module 100.

Referring to FIGS. 2 to 4, the flame blocking unit 300 is connected to the beam frame 215 and may be configured to cover the corresponding battery module 100 at the lower portion of the pack cover 220 so as to block a flame emitted from the battery module 100.

Specifically, the flame blocking unit 300 according to an embodiment of the present disclosure includes a flame blocking cover 310 covering one battery module 100 arranged between two beam frames 215 and at least one support member 320 fixedly connected to the beam frames 215 and supporting the flame blocking cover 310 to a predetermined height.

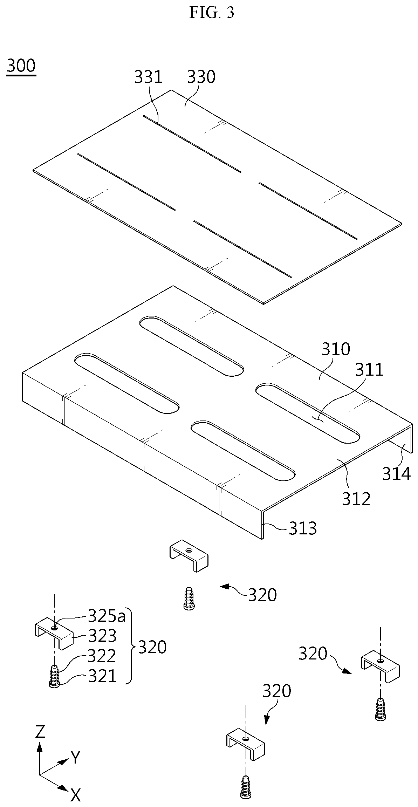

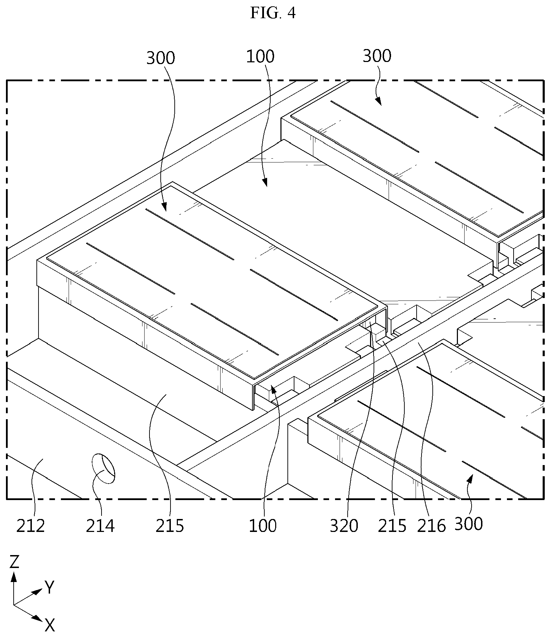

Referring to FIGS. 3 and 4, the flame blocking cover 310 includes an upper blocking plate 312 covering an upper portion of the battery module 100, a first side blocking plate 313 bent downward from one side edge of the upper blocking plate 312 and extending to a position lower than the upper end of the beam frame 215 located at the left side of the battery module 100, and a second side blocking plate 314 bent downward from the other side edge of the upper blocking plate 312 and extending to a position lower than the upper end of the beam frame 215 located at the right side of the battery module 100.

The flame blocking cover 310 may be made of a metal material with excellent heat resistance and rigidity so as not to deform even at high temperatures. In addition, the flame blocking cover 310 has at least one gas venting hole 311 in the upper blocking plate 312.

According to the configuration of the flame blocking cover 310, the upper portion of the left beam frame 215 of the battery module 100, the upper portion of the battery module 100, and the upper portion of the right beam frame 215 of the battery module 100 are integrally surrounded by the flame blocking cover 310. As a result, when the battery module 100 covered with the flame blocking cover 310 ignites, the flame may be blocked by the flame blocking cover 310 not to spread to adjacent battery modules 100. Therefore, the thermal damage to the adjacent battery modules 100 may be significantly reduced. Meanwhile, even if the battery module 100 not covered with the flame blocking cover 310 in FIG. 4 ignites, battery modules 100 adjacent thereto and covered with the flame blocking cover 310 may be protected from the flame. As described later, all battery modules 100 accommodated in the pack case 200 may be individually covered with the flame blocking cover 310, or, as in this embodiment, the flame blocking cover 310 may alternately cover the battery modules 100 in one direction (Y direction) to reduce the weight of the battery pack 10 and simplify assembly.

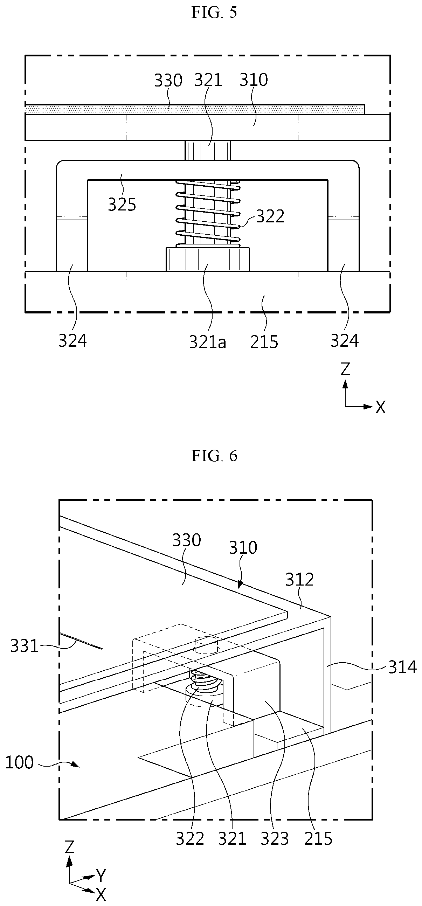

Referring mainly to FIGS. 3 and 5 to 6, the support member 320 includes a support rod 321, a compression spring 322, and a fixed bracket 323, and at least one support member 320 may be arranged at the upper end of the left beam frame 215 and the upper end of the right beam frame 215 with respect to the battery module 100.

The fixed bracket 323 may include a support plate 324 fixedly connected to the upper end of the beam frame 215 and extending in the height direction, and a detachment prevention plate 325 extending in the horizontal direction from the upper end of the support plate 324 and having a through hole 325a. Here, the support plate 324 may be fixedly connected to the upper end of the beam frame 215 by welding, bonding, or hooking.

The support plate 324 includes a first support plate 324a and a second support plate 324b that are spaced apart from each other and extend in a height direction in parallel, and the detachment prevention plate 325 may have one end connected to the first support plate 324a and the other end connected to the second support plate 324b. Unlike this embodiment, one support plate 324 or three or more support plates 324 may be provided.

The support rod 321 is provided to extend downward from the flame blocking cover 310 and pass through the through hole 325a to penetrate the detachment prevention plate 325. That is, the support rod 321 has an upper end connected to the upper blocking plate and extends to the lower portion of the detachment prevention plate 325 through the through hole 325a. The support rod 321 has a head 321a provided at a lower end thereof with a diameter larger than that of the through hole 325a. The support rod 321 may be provided so that its upper end is fixed to the flame blocking cover 310. For example, the upper end of the support rod 321 and the flame blocking cover 310 may be screwed, welded, or adhered. As another example, the flame blocking cover 310 and the support rod 321 may be formed integrally. In this case, the support rod 321 without a head 321a may be inserted into the through hole 325a of the fixed bracket 323, and then the head 321a may be assembled to the lower end of the support rod 321.

By the support rod 321, the flame blocking cover 310 may be supported from the beam frame 215 by the length of the support rod 321. Here, the upper blocking plate of the flame blocking cover 310 is located at a height higher than the upper surface of the battery module 100 and lower than the pack cover 220 by the support rod 321. In addition, the head 321a of the support rod 321 simply contacts the beam frame 215. That is, the support rod 321 is not fixedly connected to the upper end of the beam frame 215. Therefore, when pressure is applied upward from the lower portion of the flame blocking cover 310, the flame blocking cover 310 may be lifted upward. For example, if the battery module 100 covered with the flame blocking cover 310 ignites and a large amount of gas is generated, the head 321a of the support rod 321 may be detached from the beam frame 215 by the pressure of the gas, and the flame blocking cover 310 may be lifted upward. However, since the head 321a of the support rod 321 is designed not to pass through the through hole 325a of the detachment prevention plate 325, the lifting of the flame blocking cover 310 may be limited within a certain range.

The compression spring 322 is a component that is compressed when the flame blocking cover 310 is lifted to prevent a sudden rise of the flame blocking cover 310, and may be fitted into the support rod 321 between the head 321a of the support rod 321 and the detachment prevention plate 325.

If there is no compression spring 322, the head 321a of the support rod 321 may collide strongly with the detachment prevention plate 325 and be damaged when the gas pressure is very strong. As a result, it impossible to prevent the flame blocking cover 310 from being completely separated from the beam frame 215 and thus the flame of the battery module 100 from spreading to the surroundings.

However, in this embodiment, the compression spring 322 is compressed in the space between the head 321a of the support rod 321 and the detachment prevention plate 325, thereby reducing the rising speed of the flame blocking cover 310 and thus preventing damage to the head 321a of the support rod 321. In addition, when the amount of gas generated from the battery module 100 decreases, the flame blocking cover 310 may return to its original position by the elastic restoring force of the compression spring 322.

Referring again to FIGS. 3 and 4, the flame blocking cover 310 according to an embodiment of the present disclosure may further include an insulating material 330 attached to the upper surface of the flame blocking cover 310. The insulating material 330 may block the inflow of gas discharged above the flame blocking cover 310 and reflected on the pack cover 220. In addition, the insulating material 330 may play a role of preventing heat energy damage caused by flame or gas generated from another battery module 100.

The insulating material 330 may be made of mica or silicone, and may preferably be provided in the form of a pad having an area corresponding to the upper blocking plate 312 of the flame blocking cover 310.

The insulating material 330 may include a cutting portion 331 configured to be torn by a predetermined pressure. The cutting portion 331 may be provided in an area corresponding vertically with the gas venting hole 311 of the flame blocking cover 310. The cutting portion 331 of the insulating material 330 may be torn and opened by the gas pressure of the ignited battery module 100, so that the gas may be discharged to the upper portion of the flame blocking cover 310. The cutting portion 331 may be configured to be torn in a slit shape. In this case, it is difficult for the flame to easily escape to the outside through the cutting portion 331 compared to the gas.

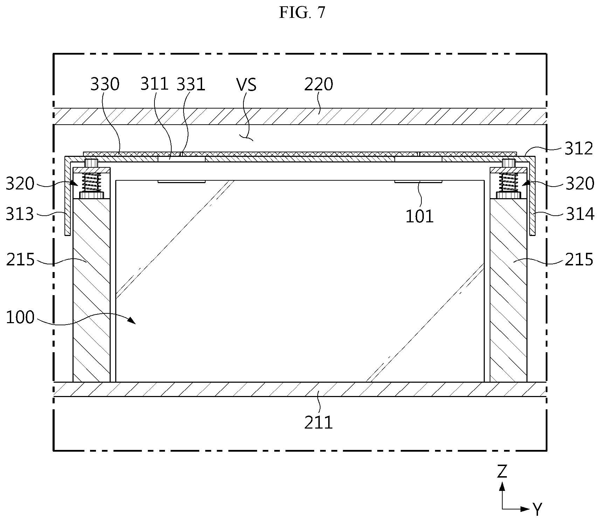

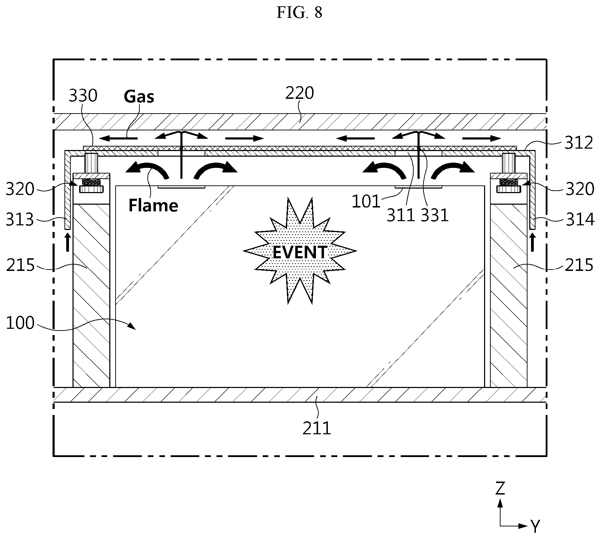

Next, referring to FIGS. 7 and 8, an example of the operation of the flame blocking unit 300 when a specific battery module 100 ignites will be briefly described as follows.

FIG. 7 is a cross-sectional view showing a portion of the battery pack 10 according to an embodiment of the present disclosure, and FIG. 8 is a cross-sectional view showing a portion of the battery pack 10 when the flame blocking unit 300 according to an embodiment of the present disclosure is lifted.

The flame blocking cover 310 of this embodiment may be positioned at a predetermined height, as shown in FIG. 7, by being supported by the support member 320 coupled to the beam frame 215. The flame blocking cover 310 surrounds the outer side of the left beam frame 215, the upper side of the battery module 100, and the outer side of the right beam frame 215 in FIG. 7. In addition, in the battery pack 10 of the present disclosure, the pack cover 220 is positioned higher than the flame blocking cover 310, so that the gas flow passage VS is provided at the lower portion of the pack cover 220 and the upper portion of the flame blocking unit 300.

In the battery pack 10 according to the present disclosure, as illustrated in FIG. 8, when a thermal event occurs in a specific battery module 100, the flame of the specific battery module 100 may be blocked by the flame blocking cover 310. Accordingly, the flame of the specific battery module 100 may be trapped without moving to an adjacent battery module 100 or the gas flow passage VS. At this time, venting gas may be introduced into the gas flow passage VS through the gas venting hole 311 of the flame blocking cover 310 and the cutting portion 331 of the insulating material 330. For reference, the gas venting hole 311 of the flame blocking cover 310 may be provided at a location corresponding vertically to the module venting hole 101 provided in the battery module 100.

Meanwhile, the flame blocking cover 310 according to this embodiment is designed to be lifted by gas, which may be regarded as being to prevent the flame blocking cover 310 from being damaged due to a rapid increase in internal pressure. In other words, if the flame blocking cover 310 is installed on the beam frame 215 in a structure that does not lift, there is a high risk that the flame blocking cover 310 will be damaged because it cannot withstand the pressure when a large amount of gas is emitted from the battery module 100. However, as described above, the flame blocking cover 310 according to this embodiment is installed on the beam frame 215 to be able to be lifted. Therefore, if a large amount of gas is emitted from the specific battery module, the flame blocking cover 310 is lifted, and so the space between the upper surface of the battery module 100 and the flame blocking cover 310 may be expanded. Therefore, the pressure increase due to the gas may be alleviated. In addition, the compression spring 322 may prevent damage to the flame blocking cover 310 by buffering the pressure applied to the flame blocking cover 310.

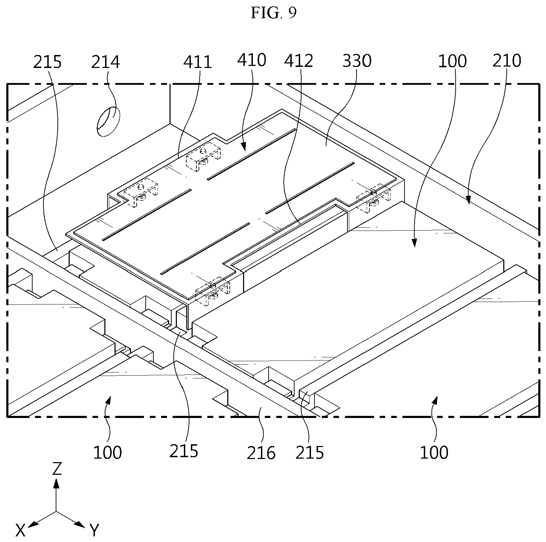

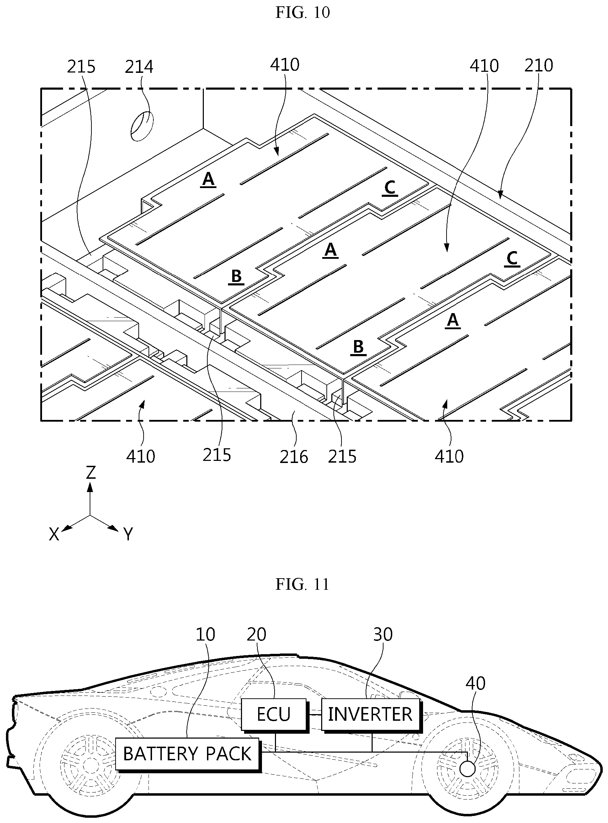

FIG. 9 is a drawing showing a portion of a battery pack 10 to which a flame blocking unit 300 according to another embodiment of the present disclosure is applied, and FIG. 10 is a drawing showing an example in which the flame blocking unit 300 is individually applied to all battery modules 100 in FIG. 9.

Next, a battery pack 10 according to another embodiment of the present disclosure will be briefly described with reference to FIGS. 9 and 10.

The same reference sign as in the former embodiment indicates the same component and will not be described in detail, and features different from the former embodiment will be explained in detail.

The battery pack according to another embodiment of the present disclosure may be configured such that, compared to the battery pack 10 according to the former embodiment, all battery modules 100 accommodated in the pack case 200 are individually covered by a flame blocking unit.

To this end, the upper blocking plate of the flame blocking cover 410 according to another embodiment of the present disclosure may have a protruding portion 411 that protrudes outwardly more than one of two beam frames 215 with respect to one battery module 100, and a recessed portion 412 that is recessed inwardly more than the other beam frame 215. For example, as shown in FIG. 9, the protruding portion 411 may be provided at the center of one side edge line of the upper blocking plate, and the recessed portion 412 may be provided at the center of the other side edge line of the upper blocking plate. Also the flame blocking cover 410 according to another embodiment of the present disclosure includes a first side blocking plate that is bent downward from an edge of the protruding portion 411 among one side edge of the upper blocking plate and extends to a position lower than the upper end of the beam frame 215, and a second side blocking plate that is bent downward from the other side edge of the upper blocking plate excluding the recessed portion 413 and extends to a position lower than the upper end of the beam frame 215.

In addition, the support member 320 may be installed at the upper end of the left beam frame 215 to support the protruding portion 411, and at the upper end of the right beam frame 215 to support both edges of the other side edge line of the upper blocking plate, respectively. In addition, the protruding portion 411 of one flame blocking cover 410 may be provided to be shape-fitted with the recessed portion 412 of the other flame blocking cover 410.

According to the above embodiment, as illustrated in FIG. 10, the recessed portion 412 of the flame blocking cover 410 covering the battery module 100 located at the left side of the beam frame 215 and the protruding portion 411 of the flame blocking cover 410 covering the battery module 100 located at the right side may be shaped-fitted. In addition, if the support member 320 is installed in the areas indicated as 'A', 'B', and 'C' among the upper ends of the beam frame 215 between the two battery modules 100, each of the battery modules 100 may be individually covered by each of the flame blocking covers 410.

Next, a vehicle according to the present disclosure will be briefly described with reference to FIG. 11.

FIG. 11 is a drawing showing a vehicle including the battery pack according to an embodiment of the present disclosure.

Referring to FIG. 11, a vehicle according to the present disclosure may be configured to include the above-described battery pack according to an embodiment of the present disclosure, an ECU (Electronic Control Unit) 20, an inverter 30, and a motor 40. Preferably, the vehicle may be an electric vehicle.

The battery pack 10 may be used as an electric energy source to drive the vehicle by providing driving force to the motor 40. The battery pack 10 may be charged or discharged by the inverter 30 according to the driving of the motor 40 and/or internal combustion engine (not shown). The battery pack 10 may be charged by a regenerative charging device combined with a brake. The battery pack 10 may be electrically connected to the motor 40 of the vehicle through the inverter 30.

The ECU 20 is an electronic control device that controls the state of the vehicle. For example, it determines torque information on the basis of information such as accelerator, brake, speed, etc., and controls the output of the motor 40 to conform to the torque information. In addition, the ECU 20 transmits a control signal to the inverter 30 such that the battery pack 10 may be charged or discharged on the basis of state information such as SOC and SOH of the battery pack 10 received from the BMS. The inverter 30 charges or discharges the battery pack 10 on the basis of the control signal from the ECU 610. The motor 40 drives, based on control information (e.g., torque information) transmitted from the ECU 20, the vehicle using the electrical energy of the battery pack 10.

As described above, when a thermal event occurs in the battery module, the battery pack 10 may suppress flame leakage to the outside of the pack case. Therefore, even if an internal ignition issue occurs in the battery pack 10 while the vehicle is running, the time required for the fire to spread to the outside of the battery pack 10 may be delayed as much as possible.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

In addition, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery pack comprising:
a plurality of battery modules;
a pack tray having an open upper portion and an inner space capable of accommodating the plurality of battery modules, the pack tray including a beam frame arranged between the battery modules adjacent to each other and partitioning the inner space;
a pack cover covering the upper portion of the pack tray; and
a flame blocking unit connected to the beam frame and provided to cover the corresponding battery module at a lower portion of the pack cover to block a flame emitted from the battery module.

2. The battery pack according to claim 1,
wherein the flame blocking unit is coupled to the beam frame so as to be lifted by a gas emitted from the corresponding battery module.

3. The battery pack according to claim 1,
wherein the flame blocking unit includes:
a flame blocking cover covering one of the battery modules disposed between two beam frames; and
at least one support member fixedly coupled to the beam frame and supporting the flame blocking cover to a predetermined height.

4. The battery pack according to claim 3,
wherein the support member includes:
a fixed bracket having a support plate fixedly coupled to an upper end of the beam frame and extending in a height direction, and a detachment prevention plate extending in a horizontal direction from an upper end of the support plate and having a through hole;
a support rod extending downward from the flame blocking cover and passing through the through hole, the support rod having a head formed at a lower end thereof with a diameter larger than the through hole; and
a compression spring fitted in the support rod between the head of the support rod and the detachment prevention plate.

5. The battery pack according to claim 4,
wherein the support plate includes a first support plate and a second support plate arranged to be spaced apart from each other and extending in the height direction in parallel, and
wherein the detachment prevention plate has one end connected to the first support plate and the other end connected to the second support plate.

6. The battery pack according to claim 3,
wherein the flame blocking cover has at least one gas venting hole.

7. The battery pack according to claim 3,
wherein the flame blocking cover further includes an insulating material attached to an upper surface of the flame blocking cover.

8. The battery pack according to claim 7,
wherein the flame blocking cover has at least one gas venting hole, and
wherein the insulating material includes a cutting portion provided in an area corresponding to the gas venting hole and configured to be torn by a predetermined pressure.

9. The battery pack according to claim 3,
wherein the flame blocking cover includes:
an upper blocking plate covering an upper portion of the battery module;
a first side blocking plate bent downward from one side edge of the upper blocking plate and extending to a position lower than an upper end of the beam frame located at a left side of the battery module; and
a second side blocking plate bent downward from the other side edge of the upper blocking plate and extending to a position lower than an upper end of the beam frame located at a right side of the battery module.

10. The battery pack according to claim 9,
wherein the upper blocking plate includes a protruding portion that protrudes outwardly from one of two beam frames with respect to one of the battery modules, and a recessed portion that is recessed inwardly from the other beam frame, and
wherein the protruding portion of one of the flame blocking covers is provided to be shape-fitted with the recessed portion of the other of the flame blocking covers, so that each of the battery modules is individually covered by each of the flame blocking covers.

11. The battery pack according to claim 10,
wherein the first side blocking plate is bent downward from an edge of the protruding portion among one side edge of the upper blocking plate, and the second side blocking plate is bent downward from an edge among the other side edge of the upper blocking plate except the recessed portion.

12. The battery pack according to claim 1,
wherein a gas flow passage is provided between an upper portion of the flame blocking unit and a lower portion of the pack cover.

13. The battery pack according to claim 3,
wherein the flame blocking cover is made of metal.

14. The battery pack according to claim 7,
wherein the insulating material is made of mica or silicone.

15. A vehicle comprising the battery pack according to any one of claims 1 to 14
